# EUROPEAN PATENT SPECIFICATION

(11) **EP 4 223 141 B1**
(45) Date of publication and mention of the grant of the patent: **07.08.2024**
(21) Application number: 23154977.5
(22) Date of filing: 03.02.2023
(51) Int. Cl.: A23K 20/24, A23K 50/60, A23K 40/10, A23K 50/10

(54) **METHOD FOR PRODUCTION OF ECO-FRIENDLY AND ULTRAPURE CALCIUMCARBONATE AS A FEED ADDITIVE**
VERFAHREN ZUR HERSTELLUNG VON UMWELTFREUNDLICHEM UND ULTRAREINEM CALCIUMCARBONAT ALS FUTTERMITTELZUSATZ
PROCÉDÉ DE PRODUCTION DE CARBONATE DE CALCIUM ÉCOLOGIQUE ET ULTRAPUR EN TANT QU'ADDITIF ALIMENTATION

(30) Priority: 04.02.2022 EP 22155292
(43) Date of publication of application: 09.08.2023
(73) Proprietor: Ca Minerals B.V., 5445 AS Landhorst (NL)
(72) Inventor: de Bruin, Eric Christian, 5445 AS Landhorst (NL); Roel Theodorus Wilhelmus BONTRUP, Landhorst / 5445 AS (NL)
(74) Representative: Patent Business B.V.

(56) References cited:
- EP-A1- 3 732 990
- GB-A- 1 537 512
- JP-A- 2021 006 612
- ANONYMOUS: "Inspiration booklet, reusing water sector residuals", AQUAMINERALS.COM/, May 2019 (2019-05-01), XP055848075, Retrieved from the Internet <URL:https://aquaminerals.com/wp-content/uploads/2019/07/Inspiration-booklet-AquaMinerals-versie-mei-2019.pdf> [retrieved on 20211006]
- OGUNLALU OLUWAFEMI ET AL: "Impact of Grinding Machine on Trace Metal Levels in Soup Condiments", INTERNATIONAL JOURNAL OF FOOD SCIENCE AND BIOTECHNOLOGY, vol. 2, no. 4, 29 November 2017 (2017-11-29), pages 130 - 133, XP055940252, DOI: 10.11648/j.ijfsb.20170204.16
- ANONYMOUS: "New: very pure lime in cattle feed", HTTPS://AQUAMINERALS.COM/NEWS/, 9 August 2020 (2020-08-09), pages 1 - 2, XP093144861, Retrieved from the Internet <URL:https://web.archive.org/web/20200809075905/https://aquaminerals.com/new-very-pure-lime-in-cattle-feed/> [retrieved on 20240322]

## Description

### Field of the invention

The invention relates to a method for producing calcium-rich feed additive, in particular for animal feed, more specifically for calf feed additive.

### Background of the invention

Many food and/or feed additives are known in the art. In particular, calcium-based additives are used in many applications where milk-like compositions/replacers are produced.

Purity and processability, amongst others, of these products has been a challenge.

EP3732990 (from the current applicant) in its abstract states " The invention provides peck stone for birds, in particular for poultry, comprising as ingredient per 100 grams 25-75 gram of pellets resulting from drinking water softening, the used pellets having a core of grafting particles selected from fine-grain sand, calcite and a combination thereof and having a particles size of 0.4-5 mm, 22-18 grams of NaCl; 36-40 grams of chalk, and 1-5 grams of molasses." Incidentally, a website http://s://web.archive.org/web/20200809075905/https://aquaminerals.com/new-very-pure-lime-in-cattle-feed recites a pure and finely-ground calcite as a carrier in premixes for the production of milk replacers.

"Inspiration booklet, reusing water sector residuals", https:// aquaminerals.com/wp-content/uploads/2019/07/Inspiration-booklet-AquaMinerals-versiemei-2019.pdf retrieved from the Internet 6 October 2021, Author: the current applicant. Disclosing general use of grinded pellets for cattle feed.

### Summary of the invention

A disadvantage of prior art that relatively expensive material is used that results from mining. Furthermore, compositions often include impurities, which influence the quality.

Hence, it is an aspect of the invention to provide an alternative feed additive, which preferably further at least partly obviates one or more of above-described drawbacks. The invention is defined in the appended claims.

There is provided a method according to claim 1.

There is furthermore provided a mineral feed additive according to claim 7, and the use of the mineral feed additive according to claim 9.

The proposed method and additive largely comprised relatively cheap and easy to obtain side product of production of drinking water, which is on the other hand suited for its purpose, as it is derived from drinking water. The pellets do not need to be transported over large distances before manufacturing the feed additive. For instance, transport distances are around hundred km instead of more than thousand kilometres.

Calcium carbonate is a cheap and non-toxic excipient largely used in solid-dosage forms as a diluent buffering and bulking agent opacifier in tablet film and dissolution adjuvant in dispersible tablets (Rowe et al., 2009).

CaCO₃ is a naturally non-toxic biomineral and is chosen because it is a safe, cheap and eco-friendly excipient able to dissolve in an acidic environment.

The current purity of this calcium carbonate product makes is suitable for excipient application in pharma.

It was furthermore found that a powder having the defined properties can be dispersed into water, for instance providing calcium for milk replacement.

The product resulting from the method can also be used ad carrier material for additives in food and feed. For instance, minerals, vitamins, aminoacids and other compounds can be mixed with the additive of product resulting from the method. The purity and specific particle sizes and/or distribution allows easy processing and acceptance.

The pellets that result from drinking water softening are largely composed of calcium carbonate, CaCO3. These pellets are also named "chalkbeads" "marble grains", precipitated calcium carbonate, or calcite (in Dutch: Kalkkorrels, marmerkorrels, geprecipiteerd calciumcarbonaat, calciet, marmerachtige kalksteen), and have EC-nr: 207-439-9, CAS-nr: 471-34-1, REACH-nr: 01-2119486795-18-xxx.

The heart of a pellet water softening installation is a reactor. The reactor or pellet reactor is filled with a grafting core or grafting grains, e.g. fine grains of calcite or other calcium-rich grafting cores. At the bottom of the reactor, water and chemicals (caustic soda, chalk milk (calciumhydroxide) or sodium carbonate) are injected and thoroughly mixed.

The chemicals increase the water pH causing calcium carbonate to precipitate from the solution and to crystallize on the grafting grains as pellets.

The pellets are fluidized by an upward flow of the water and gradually grow. This increases the weight of the pellets and reducing their surface area and reducing the net area of the fluidized bed. Furthermore, larger pellets fluidize less well than small pellets In most applications, the pellets grow up to about 1 mm. diameter. By removing too large pellets and supplying fresh grafting grains, the composition of the pellet bed is controlled.

In the Netherlands, for example, about 50 percent of the drinking water is softened using pellet reactors. The grafting grains may be replaced by calcium-rich grains, resulting in (almost) pure calcium grains or calcite pellets. Composition of available pellets:
CaCO₃ : 93 - 100%
Fe salt : <0,1 - 0,75%
Al salt : <0,1 - 0,3%
Mg salt: <0,1 - 0,2%
Mn salt: <0,1 - 0,3%
Moisture (H₂O) : <1 - 5%
In many applications, like the feed additive, the pellets have a diameter of 0,5-4 mm.

In the method, the chalk is derived from grinded pellets resulting from drinking water softening and having calcite particles as grafting particles. In this way, a pure material can be used that is human food and animal feed safe.

For ultra-fine grinding of the pellets an air classification mill is used.

In an embodiment, the mill rotational velocity on production scale is 1500-2000 rpm, preferably 1600-1800 rpm.

In a further embodiment, the classified wheel rotational velocity is 200-800 rpm, preferably 400-600 rpm.

It was found that proper settings lead to a product that is easy to use and disperse. Coarse particles are unwanted. Too fine material was also not preferable.

In the method, there is provided pellets resulting from drinking water softening and comprising a calcium carbonate grafting core. The grafting core contains at least 35 wt.% calcium and has a calcium carbonate content of at least 90 wt.%, in particular more than 95 wt.%, more in particular more than 97 wt.%. When carefully preparing the grafting core, a calcium carbonate content of more than 99 wt.% is possible. Good result were obtained when using grinded pellets as grafting core.

In an embodiment, the feed additive comprises more than 90% by weight calcium carbonate, in particular more than 97% by weight.

In an embodiment, the pellets comprise more than 95 wt.% calcium carbonate, in particular more than 97 wt.%, more in particular more than 99 wt.%.

In an embodiment, the method comprises sieving the pellets before ultra fine grinding to a sieve diameter smaller than 3 mm. In the experimental part below, a particle size distribution is presented.

For keeping the iron contents below 50 ppm end even below 10 ppm, a disc grinder is provided having ceramic and or hardox steel wear protection. A mill with an air classification system is used for obtaining a required particle size distribution.

There is furthermore provided a mineral feed additive produced using the method. In an embodiment, the mineral feed additive produced using the method comprises per 100 gram more than 97% by weight calcium carbonate, an iron content below 10 ppm, and a particle size distribution D99 below 100 micron. In a particular embodiment, it has D90 below 60 micron.

In an embodiment, the current mineral feed additive has an optimized settling behaviour.

As an example, one gram of the current mineral feed additive was added to 50 grams of milk for calves. This was dissolved in 350 ml water at 40°C. Some sediment was visible after carful pouring the liquid after 15 minutes at room temperature. The sediment is soft. Settling rates (cm/h) of the end product were determined in both water and a known milk replacer matrix. At fluid temperatures of 20°C - 50°C with particle sizes (D90) of 10-100 micron. Typical settling rates or settling velocity of 10-100 cm/h were found for the current feed additive in the fluids.

In an embodiment, there is further presented the use of the mineral feed additive produced using the current method in animal feed, in particular in calve feed, in particular in a dosage of 1-10 gr/kg in the feed as calcium source.

Also disclosed for illustration purposes but not forming part of the present invention is a use of pellets resulting from decalcification of drinking water in a feed additive, in which said pellets have a core of calcium-rich grafting particles, such as calcite grafting particles. An advantage of such particular pallets is that it can be used completely and results in high quality end products. Furthermore, the composition may be even better guaranteed and checked. The grafting core may be made from recycled pellets which are broken into smaller cores, wherein the grafting pellets have a calcium carbonate content of more than 90 wt.%. In particular, the grafting core has a calcium carbonate content of more than 95 wt.%. In particular applications, the calcium carbonate content can even be more than 97 wt.%. In some applications, like animal feed and human food additives, for instance, the calcium carbonate content of the grafting core can even be more than 99 wt.%. The term "comprise" includes also embodiments wherein the term "comprises" means "consists of'.

### Brief description of the drawings

In the attached figures, some results are illustrated, showing:
Figure 1: an impression of the pellets before processing;
Figure 2: dry matter versus drying time;
Figure 3: table showing particle size;
Figure 4: table showing ZPS 200 settings and results;
Figure 5: table showing particle size measurements;
Figure 6: table showing UPZ315 settings and results, and
Figure 7: table showing measured product properties.

Embodiments of the invention will now be described, by way of example only, with reference to the accompanying example.

### Description of preferred embodiments

The already described pellets have a size of between 0.5-4 mm.

### Feed material: calcite beads or pellets, preprocessing

The specific calcium carbonate beads are produced from a pellet reactor process directed to softening of water, especially drinking water (ACTINA^{™}, "Reducing water hardness with pellet softening". (Veolia Water Solutions & Technologies, Saint-Maurice Cedex, France). The beads are produced in a reactor in which a bed of fine calcite or sand is maintained in fluidization. Calcite or sand particles are used as a crystallization seed for the calcium carbonate that is present in the water. The calcium carbonate precipitates on the surface of the calcite or sand particles under basic pH conditions. In the current application, the produced beads or pellets are first drained end dried.

Following drainage, the water content of the calcium carbonate beads is lower than 5%. These beads are presently used for low value purposes as road embankment material, pipeline trench sublayers and in cement as sand replacer. Usually, draining is done for at least 12 hours. In particular applications, draining is done for at least 24 hours. In sone instances, draining is done for at least 48 hours. Usually, the pellets rest in a bunker, warehouse or similar place that is sheltered from the outdoors elements and that has a drainage system onto which the pellets rest.

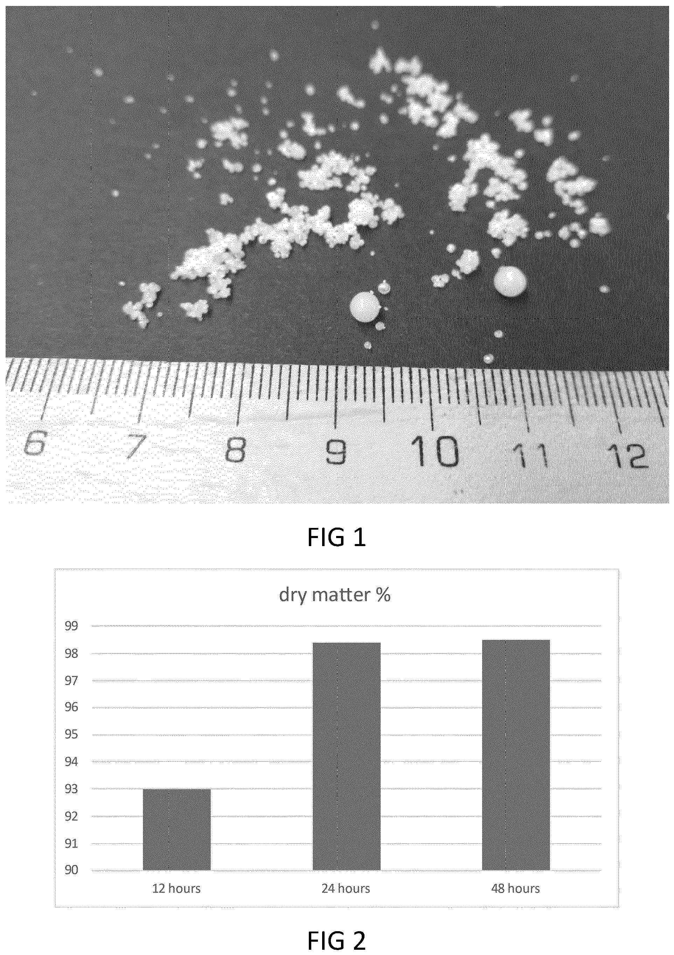

The current calcium carbonate beads or pellets are spherical, in fact almost perfectly round, and can be composed of about 95-99 % of weight of calcium carbonate. The diameter of the beads is between 0.1 and 5 mm, normally between 0.8 and 2.4 mm, or between 0.5 and 2 mm. Most preferably, the calcium carbonate beads have an average diameter of about 1 mm. A preferred method for determining the average particle size of the beads is sieve analysis or gradation test, which is commonly used to assess the particle size distribution of a granular material (see Figure 1). A sieve is also preferably used to select calcium carbonate beads have a diameter larger than 3 mm, and/or beads that have an average diameter of about 1 mm. The hardness of calcium carbonate beads is between 10-100, as determined with a sclerometer, for example a Turner-sclerometer. The hardness of calcium carbonate beads is higher than of calcite, which is about 9. The density of calcium carbonate beads is about 1400 kg/m³. Calcium carbonate beads, as herein described, are produced during the water softening process. The beads consist of solid CaCO₃ that is layered around a calcite nucleus.

### Processing Method of the pellets

Air classification grinding of calcite pellets with low iron release.

Principle of operation: The calcite beads described above are dosed to the grinding chamber equipped with a fixed grinding track and a rotating grinding disc with grinding elements. The material is comminuted by collision with the grinding elements and the grinding track. The grinded material is then transported by an air flow which rises through the gap between grinding track and grinding disc to the classifying wheel in the top of the mill. The fine particles pass the classifying wheel and exit the mill entrained in the air. The coarse particles are rejected and fall back onto the rotating disc where they are comminuted further until they reach the required fineness. The fineness is set by adjusting the speed of the classifying wheel.

From several small scale product development tests, an optimal mill speed of 5500 rpm with a classifier speed of 900 rpm was found for the optimal product included for below purposes. For example, a Hosokawa Alpine Ag Zirkoplex-classifier mill ZPS with integrated ALPINE Turboplex Ultrafine Classifier ATP was used (or similar grinding mills with an air classification system).

As a comparison, testing was done using a UPZ 315 grinder, air classification is not included. This device was able to result in a fineness of the end material with a particle size distribution D90 measured with laser diffraction of below 120, end even around 100 micron. The ZPS 200 grinder with air classification, however, proved more suitable as is allowed a particle size distribution D90 measured with laser diffraction of below 100, end even below 60 micron (see table). The current results have also been obtained using the ZPS630 mill on production scale. It can be done with a capacity of 3-5 Metric tons/h. The particle size D90 measured using laser diffraction can be below 60 micron. In most examples, mill speed was set to 1600-1800 rpm and classifier speed to 100-600 rpm. For low iron contents of the product, wear protection by ceramic and/ or hardox steel grinding elements are used.

For the ZP200, an airflow of 50 m3/h was set.

Particle size distribution was measured using laser diffraction and using sieve analysis, in particular air jet sieve analysis.

### Starting material

The pellets have first been drained in a bunker. The resulting water contents is presented below and fig. 2.

| Drying time | dry matter % |
|---|---|
| 12 hours | 93 |
| 24 hours | 98.4 |
| 48 hours | 98.5 |

Sieving analysis was done on the starting material, i.e. calcite beads from drinking water production. Figure 1 shows a sample of the starting material.

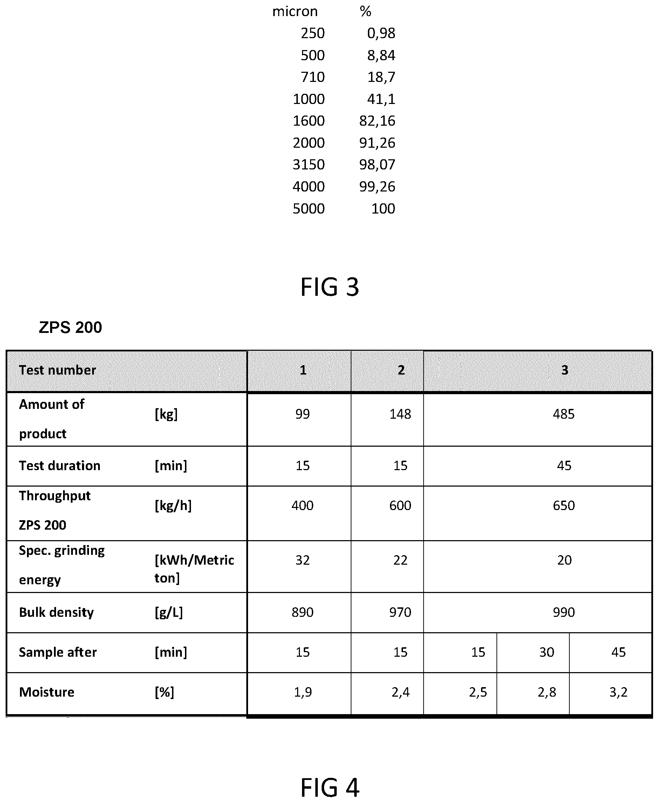

Sieved using Alpine air jet sieve e200 LS. Resulting cumulative undersize particle size distribution is presented in the table shown in figure 3.

### End product

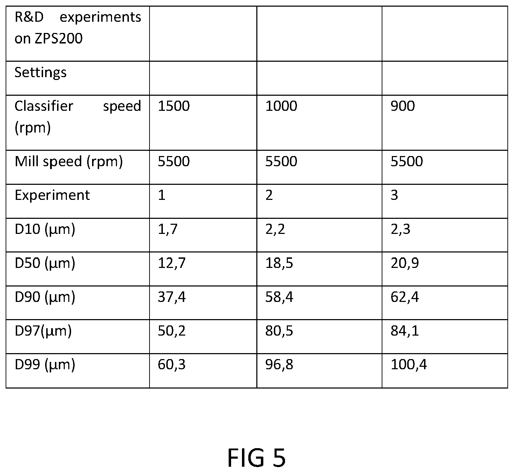

Below are results for milling and separation of the starting material using the ZPS 200. The properties of the starting material are as presented above. Different mills have been used. Results are shown in the table presented in figure 4. Particle size measurement results are shown in figure 5. Particle size was measured using laser diffraction.

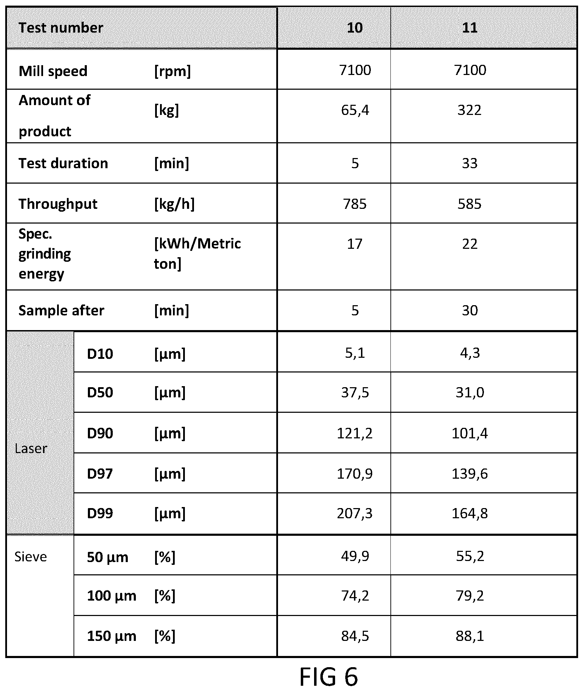

Figure 6 shows a table with the experiments using a UPZ315.

### UPZ 315 - equipped with plate beaters and grinding track

In the table above, a sample distribution and cumulative distribution are presented, produced using a ZPS 200 apparatus with settings as indicated.

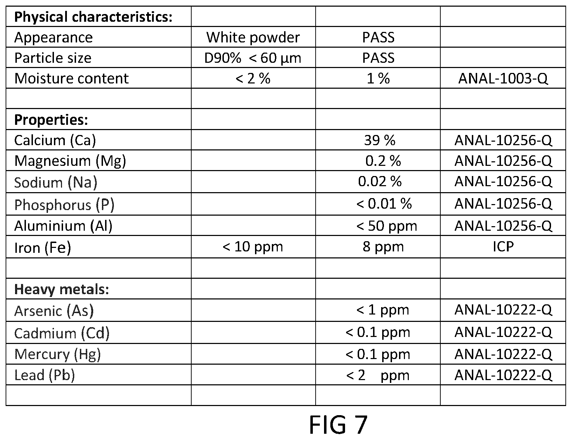

Testing revealed the following properties, see the table of figure 7.

Conclusion: in experiment 1 the material is relatively fine, the product from experiment 2 and 3 has the optimal particle size (D90 < 60µm and D99 < 100µm) for premix application. Grinding with Air classification is required to produce this material.

The settings of ZPS200 were translated to ZPS630 (classifier speed 500 rpm and mill speed 1700 rpm) for identical particle size distribution on production scale. The settling properties of the resulting feed additive are described above.

## Claims

1. A method for producing a mineral feed additive comprising > 60 wt.% calcium carbonate, in particular comprising calcite, in particular an animal mineral feed additive, more in particular for calves, comprising:
- providing pellets resulting from drinking water softening, said pellets being a side product of production of drinking water in a pellet reactor of a water softening installation, the pellets having a grafting core having at least 35 wt.% calcium, in particular at least 90 wt.% calcium carbonate, the pellets having a pellet size of 0.1 to 5 mm measured using sieve analysis, and an iron content below 100 ppm, in particular below 50 ppm, more in particular 5 ppm;
- drying the pellets to a moisture content of below 10 wt.%, in particular below 2 wt.%;
- grinding the pellets in a mill with an air classification system using a grinding disc therewith obtaining grinded pellets, wherein a disk grinder is used having ceramic and/or hardox steel wear protection, and
- separating the particles from the grinded pellets through a classifying wheel using an air flow, resulting in a particle size distribution with D99 of less than 100 micron measured using a sieve measurement and D99 of less than 100 micron measured using laser diffraction, a calcium content of between 35% and 40% by weight, and an iron content of less than 50 ppm, in particular less than 10 ppm.

2. The method of claim 1, wherein the mill rotational velocity on production scale is 1500-2000 rpm, preferably 1600-1800 rpm.

3. The method of claim 1 or 2, wherein the classified wheel rotational velocity is 200-800 rpm, preferably 400-600 rpm.

4. The method of any one of the preceding claims, wherein the feed additive comprises more than 90% by weight calcium carbonate, in particular more than 97% by weight.

5. The method of any one of the preceding claims, wherein the pellets comprise more than 95% by weight calcium carbonate, in particular more than 97% by weight, more in particular more than 99% by weight.

6. The method of any one of the preceding claims, wherein the pellets are sieved before grinding to a sieve diameter smaller than 3 mm.

7. A mineral feed additive produced using the method of any one of the preceding method claims.

8. A mineral feed additive according to claim 7, comprising per 100 gram more than 97% by weight calcium carbonate, an iron content below 10 ppm, and a particle size distribution D99 below 100 micron.

9. Use of the mineral feed additive produced using the method of any one of the preceding method claims in animal feed, in particular in calve feed, in particular in a dosage of 1-10 gr/kg in the feed.

## Patentansprüche

1. Verfahren zur Herstellung eines mineralischen Futterzusatzes umfassend > 60 Gew.-% Calciumcarbonat, insbesondere umfassend Calcit, insbesondere eines tierischen mineralischen Futterzusatzes, weiter insbesondere für Kälber, umfassend:
- Bereitstellen von Pellets aus der Trinkwasserenthärtung, wobei die Pellets als Nebenprodukt bei der Herstellung von Trinkwasser in einem Pelletreaktor einer Wasserenthärtungsanlage anfallen, wobei die Pellets einen Pfropfkern aufweisen, der mindestens 35 Gew.-% Calcium, insbesondere mindestens 90 Gew.-% Calciumcarbonat aufweist, wobei die Pellets eine Pelletgröße von 0,1 bis 5 mm gemessen mit einer Siebanalyse und einen Eisengehalt von unter 100 ppm, insbesondere unter 50 ppm, weiter insbesondere 5 ppm aufweisen;
- Trocknen der Pellets auf einen Feuchtigkeitsgehalt von unter 10 Gew.-%, insbesondere unter 2 Gew.-%,
- Mahlen der Pellets in einer Mühle mit Luftklassierungssystem unter Verwendung einer Mahlscheibe, wodurch gemahlene Pellets erhalten werden, wobei ein Scheibenschleifer, insbesondere mit einem Verschleißschutz aus Keramik und/oder Hardox-Stahl, verwendet wird, und
- Abtrennen aus den gemahlenen Pellets durch ein Sichterrad mittels Luftstrom, wodurch eine Partikelgrößenverteilung mit D99 von kleiner 100 Mikrometer gemessen über Siebmessung und D99 von kleiner 100 Mikrometer gemessen über Laserbeugung, ein Calciumgehalt zwischen 35 und 40 Gew.-% und ein Eisengehalt von kleiner 50 ppm, insbesondere kleiner 10 ppm, erreicht wird.

2. Das Verfahren gemäß Anspruch 1, wobei die Rotationsgeschwindigkeit der Mühle im Produktionsmaßstab 1500-2000 U/min, vorzugsweise 1600-1800 U/min beträgt.

3. Das Verfahren gemäß Anspruch 1 oder 2, wobei die klassifizierte Radrotationsgeschwindigkeit 200-800 U/min, vorzugsweise 400-600 U/min beträgt.

4. Verfahren nach einem der vorhergehenden Ansprüche, wobei der Futterzusatz zu mehr als 90 Gew.-% aus Calciumcarbonat besteht, insbesondere zu mehr als 97 Gew.-%.

5. Das Verfahren nach einem der vorhergehenden Ansprüche, wobei die Pellets mehr als 95 Gewichtsprozent Calciumcarbonat, insbesondere mehr als 97 Gew.-%, ganz besonders mehr als 99 Gew.-%, umfassen.

6. Verfahren nach einem der vorhergehenden Ansprüche, wobei die Pellets vor dem Mahlen auf einen Siebdurchmesser kleiner als 3 mm gesiebt werden.

7. Ein mineralischer Futterzusatz, der unter Verwendung des Verfahrens gemäß einem der vorhergehenden Verfahrensansprüche hergestellt wird.

8. Ein mineralischen Futterzusatz nach Anspruch 7, der pro 100 Gramm mehr als 97 Gew.-% Calciumcarbonat, einen Eisengehalt unter 10 ppm und eine Partikelgrößenverteilung D99 unter 100 Mikron, enthält.

9. Verwendung des nach dem Verfahren gemäß einem der vorhergehenden Verfahrensansprüche hergestellten mineralischen Futterzusatzes in Tierfutter, insbesondere in Kälberfutter, insbesondere in einer Dosierung von 1-10 gr/kg im Futter.

## Revendications

1. Procédé de production d'un additif alimentaire minéral comprenant > 60 % en poids de carbonate de calcium, comprenant en particulier de la calcite, en particulier un additif alimentaire minéral pour animaux, plus particulièrement pour veaux, comprenant:
- fournir des pellets issus de l'adoucissement de l'eau potable, lesdits pellets étant un sous-produit de la production d'eau potable dans un réacteur à pellets d'une installation d'adoucissement de l'eau, les pellets ayant un noyau de greffage contenant au moins 35 % en poids de calcium, en particulier au moins 90 % en poids de carbonate de calcium, les granulés ayant une taille de granulés de 0,1 à 5 mm mesurée par analyse par tamisage, et une teneur en fer inférieure à 100 ppm, en particulier inférieure à 50 ppm, plus particulièrement 5 ppm ;
- sécher les pellets jusqu'à une teneur en humidité inférieure à 10 % en poids, en particulier inférieure à 2% en poids.;
- broyer les granulés dans un broyeur doté d'un système de classification de l'air à l'aide d'un disque de broyage, pour obtenir des granulés broyés, dans lequel on utilise une meuleuse à disque dotée d'une protection contre l'usure en céramique et/ou en acier hardox, et
- séparation les particules des pellets broyés à travers une roue de classement à l'aide d'un flux d'air, conduisant à une répartition granulométrique avec un D99 inférieur à 100 microns mesuré par mesure au tamis et un D99 inférieur à 100 microns mesuré par diffraction laser, une teneur en calcium comprise entre 35% et 40% en poids, et une teneur en fer inférieure à 50 ppm, notamment inférieure à 10 ppm.

2. Procédé selon la revendication 1, dans lequel la vitesse de rotation du broyeur à l'échelle de production est de 1500-2000 tr/min, de préférence de 1600-1800 tr/min.

3. Procédé selon la revendication 1 ou 2, dans lequel la vitesse de rotation classée de la roue est de 200 à 800 tr/min, de préférence de 400 à 600 tr/min.

4. Procédé selon l'une quelconque des revendications précédentes, dans lequel l'additif alimentaire comprend plus de 90 % en poids de carbonate de calcium, en particulier plus de 97 % en poids.

5. Procédé selon l'une quelconque des revendications précédentes, dans lequel les pellets comprennent plus de 95 % en poids de carbonate de calcium, en particulier plus de 97 % en poids, plus particulièrement plus de 99 % en poids.

6. Procédé selon l'une quelconque des revendications précédentes, dans lequel les granulés sont tamisés avant d'être broyés jusqu'à un diamètre de tamis inférieur à 3 mm.

7. Additif alimentaire minéral produit en utilisant le procédé de l'une quelconque des revendications de procédé précédentes.

8. Additif alimentaire minéral selon la revendication 7 comprenant pour 100 grammes plus de 97 % en poids de carbonate de calcium, une teneur en fer inférieure à 10 ppm, et une distribution granulométrique D99 inférieure à 100 microns.

9. Utilisation de l'additif alimentaire minéral produit à l'aide du procédé selon l'une quelconque des revendications précédentes dans l'alimentation animale, en particulier dans l'alimentation des veaux, en particulier à un dosage de 1 à 10 g/kg dans l'aliment.
